# EUROPEAN PATENT APPLICATION

(11) **EP 2 506 346 A1**
(43) Date of publication of application: **03.10.2012**
(21) Application number: 12160859.0
(22) Date of filing: 22.03.2012
(51) Int. Cl.: H01M 4/36, H01M 10/0525, H01M 10/44

(54) **Method of manufacturing lithium ion storage device**

(30) Priority: 31.03.2011 JP 2011078615
(71) Applicant: Fuji Jukogyo Kabushiki Kaisha, Tokyo 160-8316 (JP)
(72) Inventor: Utsunomiya, Takashi, Tokyo, 160-8316 (JP)
(74) Representative: Sajda, Wolf E.

(57) **Abstract**

There is provided a method of manufacturing a lithium ion storage device. A lithium ion storage device (10) produced by the method includes a positive electrode (18) having a positive electrode active material (22) that contains a lithium-containing compound, and a negative electrode (12) having an alloy-based negative electrode active material (16). A charge potential in a first cycle is higher than charge potentials in second and subsequent cycles.

## Description

### BACKGROUND OF THE INVENTION

### 1. Field of the Invention

The present invention relates to a method of manufacturing a lithium ion storage device that is provided with a positive electrode having a positive electrode active material containing a lithium-containing compound.

### 2. Description of the Related Art

In recent years, lithium ion storage devices have come to be used in the form of lithium ion rechargeable batteries or the like in various fields, for instance, vehicles and portable devices related to information and communications. There is known a vertical pre-doping method for such lithium ion storage devices. This method involves doping lithium ions beforehand to a negative electrode with a view to, for instance, compensating for the irreversible capacity fraction of a negative electrode active material.

Vertical pre-doping is disclosed in, for instance, Japanese Patent No. 4 126 157. In vertical pre-doping, a third electrode for supply of lithium ions to a positive electrode and a negative electrode, the third electrode being other than the positive electrode and the negative electrode, is used to cause lithium ions to pass perpendicularly to a collector, by way of a through-hole provided therein, so that the lithium ions are supplied to a positive electrode and/or negative electrode.

As described above, vertical pre-doping requires a third electrode, for instance a lithium electrode, other than a positive electrode and a negative electrode. Therefore, a manufacturing process involved is more complex, and requires a longer time and a higher cost, than that of a conventional lithium ion storage device in which pre-doping is not performed.

Further, metallic lithium is used as a material constituting the third electrode, and hence some metallic lithium may remain, in the form of a fine powder, after pre-doping. This adversely affects safety. Furthermore, in pre-doping-type storage devices, the third electrode becomes unnecessary after pre-doping has been completed. Therefore, such storage devices are disadvantageous, in terms of energy density, as compared with devices having no third electrode.

### SUMMARY OF THE INVENTION

The present invention aims to perform pre-doping in a simple manner, without any supplementary manufacturing process, and to enhance an energy density and a cycle characteristic, without reducing safety.

In order to attain the above goals, an aspect of the present invention provides a method of manufacturing a lithium ion storage device that is provided with a positive electrode having a positive electrode active material containing a lithium-containing compound, and a negative electrode having an alloy-based negative electrode active material. In this method, a charge potential in a first cycle is higher than charge potentials in second and subsequent cycles.

Thus, the negative electrode can be pre-doped from the positive electrode, without using a third electrode, simply through control of charge potential, i.e. by setting the charge potential in the first cycle to be higher than the charge potential in the second and subsequent cycles. More specifically, the negative electrode is reliably pre-doped by increasing the charge potential in the first cycle, while a good cycle characteristic can be maintained by lowering a charge potential in the second cycle (charge potential in the second and subsequent cycles).

In particular, cycle deterioration occurs on account of, for instance, decomposition of an electrolyte solution (cell swelling) or collapse of the active material, when cycles are performed in a state where a charge potential remains set at a high potential of the first cycle.

Meanwhile, deterioration of the negative electrode is accelerated due to the use of an alloy-based material in the vicinity of SOC 0 %, when charging in the first cycle is performed at a low charge potential and subsequent cycles as well are performed at a low charge potential.

In the present invention, by contrast, such problems can be prevented by setting the charge potential in the first cycle to be higher than the charge potential in the second and subsequent cycles.

Preferably, a charge capacity of the positive electrode in the first cycle should range from 111 % to 167 % of a charge capacity in the second cycle. That is, the capacity of a charge potential difference can be passed on to the negative electrode by using as the positive electrode active material a material whose charge capacity exhibits potential dependence, and by setting the charge potential in the first cycle to be higher than the charge potential in the second and subsequent cycles. This capacity of the charge potential difference is the pre-doping capacity to the negative electrode, which is to be defined.

Preferably, the charge potential (vs.Li/Li⁺) of the positive electrode in the first cycle should be 4.4 V or higher, and more preferably, from 4.4 V to 4.6 V. In this case the charge potential in the second cycle should preferably range from about 93 % to 98 % of the charge potential in the first cycle.

Preferably, the positive electrode active material includes a first active material and a second active material, the capacity of the first active material at 4.4 V or lower should be larger than that of the second active material, and the capacity of the second active material at 4.4 V or higher should be larger than that of the first active material.

As a result, an ideal chemical characteristic can be imparted to the positive electrode active material such that the positive electrode active material has a large capacity necessary for pre-doping on a high charge potential side of 4.4 V or higher, while having a large capacity on a low charge potential side of 4.4 V or lower.

Preferably, a use region of the negative electrode active material ranges from 4 % to 80 %, and more preferably, from 10 % to 70 %, of a full capacity.

The present invention allows the negative electrode to be pre-doped from the positive electrode simply by controlling a charge potential with a conventional active material, i.e. an active material that involves no separate manufacturing process for performing pre-doping. Therefore, it is possible to perform pre-doping safely at a reduced manufacturing cost, without providing a third electrode for pre-doping.

Also, a decrease in the energy density can be suppressed, since no third electrode need be provided. Further, deterioration of the cycle characteristic can be prevented by controlling the charge potential (in particular, by lowering the charge potential in the second and subsequent cycles).

### BRIEF DESCRIPTION OF THE DRAWINGS

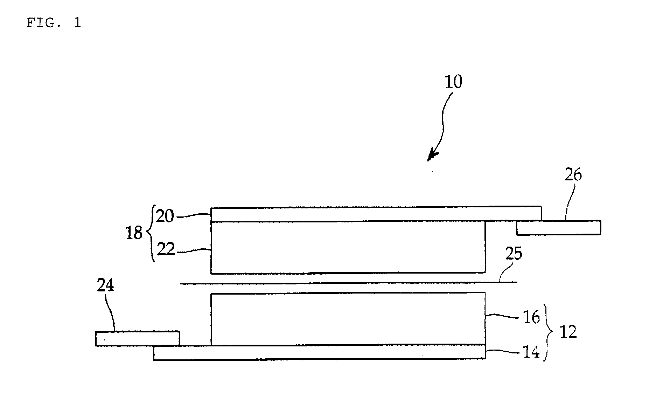

- Fig. 1: is a schematic cross-sectional diagram of an interior of a lithium ion storage device according to an embodiment of the present invention.

### DESCRIPTION OF THE PREFERRED EMBODIMENT

An embodiment of the present invention will be explained hereinbelow. Fig. 1 is a schematic cross-sectional diagram of an interior of a lithium ion storage device 10 according to the present embodiment. The lithium ion storage device 10 according to the present embodiment includes a positive electrode 18 having a positive electrode active material that can dope and de-dope lithium ions; a negative electrode 12 having a negative electrode active material that can dope and de-doped lithium ions; and a nonaqueous electrolyte solution (not shown) filled in between the positive electrode 18 and the negative electrode 12. Charging and discharging are performed by the movement of lithium ions between the positive electrode 18 and the negative electrode 12, and an electric current can be extracted during discharging.

The positive electrode 18 and the negative electrode 12 are stacked with a film-like separator 25 therebetween. The separator 25 is impregnated with a nonaqueous electrolyte solution. In a case where the positive electrodes 18 and negative electrodes 12 are present as a plurality thereof, the positive electrode 18 and the negative electrode 12 are alternately stacked with each other. A stacked-type electrode unit resulting from stacking on a flat plate or a wound-type electrode unit resulting from winding a stack can also be used in the present embodiment.

As used herein, the term "doping" includes conceptually storage, intercalation, adsorption, support and so forth, and the term "de-doping" includes conceptually reverse processes of the foregoing. The lithium ion storage device may be for instance, a lithium ion rechargeable battery, a lithium ion capacitor or the like.

In the present embodiment, the negative electrode 12 is formed with a collector 14 that includes a metal substrate such as Cu foil, and provided with a lead 24 for connection to an external circuit; and a negative electrode active material layer 16 that is provided on one or both faces of the collector 14. The negative electrode active material layer 16 is formed by coating onto the collector 14 and drying a slurry of a negative electrode active material, a binder and a conduction aid in a solvent such as NMP.

The negative electrode active material is a substance into which lithium ions can be doped and from which lithium ions can be de-doped. As such there can be used a metal material, as well as a carbon material, or metal material or alloy material or oxide that can store lithium ions, or a mixture of the foregoing. The particle size of the negative electrode active material ranges preferably from 0.1 µm to 30 µm.

Examples of the metal material include silicon and tin. Examples of the alloy material include a silicon alloy and a tin alloy. Examples of the oxide include a silicon oxide, a tin oxide and a titanium oxide. Examples of the carbon material include graphite, non-graphitizable carbon, graphitizable carbon, and a polyacene-based organic semiconductor. The foregoing materials may be used in the form of a mixture. The present invention is particularly effective in storage devices that have an alloy-based negative electrode including silicon, tin or the like.

In the present embodiment, the positive electrode 18 is formed with a collector 20 that includes a metal substrate such as A1 foil, and is provided with a lead 26 for connection to an external circuit; and a positive electrode active material layer 22 provided on one or both faces of the collector 20. The positive electrode active material layer 22 is formed by coating onto the collector 20 and drying a slurry of a positive electrode active material, a binder and a conduction aid in a solvent such as NMP.

In the present embodiment, the type and amount of the positive electrode active material are adjusted in such a manner that the charge capacity of the positive electrode in a first cycle in ranges from 111 % to 167 % of the charge capacity in a second cycle. The charge capacity in the first cycle in the positive electrode ranging from 111 % to 167 % of the charge capacity in the second cycle is a value resulting from dividing the charge capacity in the first cycle by the charge capacity in the second cycle. When the capacity is at 111 %, this corresponds to a charge capacity of 90 in the second cycle, taking as 100 the charge capacity in the first cycle, and when the capacity is at 167 %, this corresponds to a charge capacity of 60 in the second cycle, taking as 100 the charge capacity in the first cycle.

Charging in the first cycle (initial charge) denotes performing charging for a first time after an assembly of the storage device (i.e. denotes release of lithium ions from the positive electrode and insertion of the lithium ions into the negative electrode). Discharging in the first cycle (initial discharge) denotes discharging performed for a first time after the above-described initial charging (i.e. release of lithium ions from the negative electrode and insertion of the lithium ions into the positive electrode). One set of charging and discharging in the first cycle is referred to as one cycle.

Preferably, the positive electrode active material according to the present embodiment has a large capacity on a high potential side.

In the present embodiment, the negative electrode active material is pre-doped with a capacity (lithium ion amount) corresponding to a difference in charge potential between high charge potential in the first cycle and low (ordinary use) charge potential in the second cycle . Herein, pre-doping denotes doping of lithium ions to the negative electrode 12 beforehand, prior to charging in the first cycle.

Pre-doping is a method employed to compensate for the irreversible capacity fraction of the negative electrode active material from outside the negative electrode, and to adjust a lower limit of the use region (SOC) of the negative electrode active material to a desired value.

Preferably, pre-doping is performed in an environment at a temperature not higher than 40°C. Generation of gas from the electrolyte solution and formation of an SEI (solid electrolyte film) during pre-doping can be averted in the low-temperature environment at a temperature not higher than 40°C. As a result, pre-doping can be performed uniformly.

In the present embodiment there is not provided a charging step of pre-doping alone. Instead, a pre-doping fraction is charged to the negative electrode 12 during an early stage of charging in the first cycle. Accordingly, the positive electrode active material in the present embodiment must have a sufficient capacity as required for pre-doping on a high potential side. An ideal positive electrode active material has a large capacity at both high charge potential and low (ordinary use) charge potential. However, there are few such materials among currently known positive electrode active materials.

In the present embodiment, accordingly, there may be used a single positive electrode active material, or a mixture of a plurality of types of positive electrode active materials, so as to achieve desired charging and discharge characteristics. Preferably, for instance, the charge potential of the positive electrode in the first cycle is 4.4 V or higher, and the charge potential in the second and subsequent cycles is lower than 4.4 V.

A lithium-containing compound capable of doping and de-doping lithium ions can be used as the positive electrode active material. Suitable examples include an oxide, a phosphate, a nitride, an organic material, a sulfide (including an organic sulfur and an inorganic sulfur), a metal complex, a conductive polymer, a metal.

In particular, there is preferably used a positive electrode active material having a large lithium release amount, for instance a transition metal oxide or phosphate such as LiCoO₂, LiNiO₂, LiMn₂O₄ or LiFePO₄; an organic compound such as an alkoxide material, a phenoxide material, a polypyrrole material, an anthracene material, a polyaniline material, a thioether material, a thiophene material, a thiol material, a sulfurane material, a persulfarane material, a thiolate material, a dithioazole material, a disulfide material, a polythiophene material or the like; a sulfide or a conductive polymer, and an inorganic sulfur having been imparted with lithium beforehand. The particle size of the positive electrode active material ranges preferably from 0.1 µm to 30 µm.

A nonaqueous electrolyte solution is used as the electrolyte solution in the present invention since electrolysis does not occur even under high voltage and lithium ions can be stably present. An electrolyte solution is formed by dissolving an ordinary lithium salt serving as an electrolyte into a solvent. The electrolyte and the solvent are not particularly limited to these. For instance, as the electrolyte there may be used LiClO₄, LiAsF₆, LiBF₄, LiPF₆, LiB(C₆H₅)₄, CH₃SO₃Li, CF₃SO₃Li, (C₂F₅SO₂)₂NLi or (CF₃SO₂)₂NLi, or a mixture of the foregoing.

These electrolytes may be used singly or any of these may be used in combination. In the present embodiment there are especially preferably used LiPF₆ and LiBF₄. As the solvent of the nonaqueous electrolyte solution there can be used a chain carbonate such as dimethyl carbonate (DMC), diethyl carbonate (DEC) and methyl ethyl carbonate (MEC); a cyclic carbonate such as ethylene carbonate (EC), propylene carbonate (PC), butylene carbonate (BC) and vinylene carbonate (VC); or a solvent having a comparatively low molecular weight such as acetonitrile (AN), 1,2-dimethoxyethane (DME), tetrahydrofuran (THF), 1,3-dioxolane (DOXL), dimethyl sulfoxide (DMSO), sulfolane (SL), and propionitrile (PN), as well as mixtures of the foregoing.

Preferably, the solvent of the electrolyte solution in the present embodiment is a mixture of a chain carbonate and a cyclic carbonate. A multi-mixture of two or more types of chain carbonate and two or more types of cyclic carbonate may also be used. Fluoroethylene carbonate (FEC) or the like may also be added to the solvent, as necessary.

In the present embodiment, preferably, the use region of the negative electrode active material ranges from 4 % to 80 % of full capacity. The cycle characteristic is enhanced if the use region of the negative electrode active material ranges from 4 % to 80 % of the full capacity. More preferably, the use region of the negative electrode active material ranges from 10 % to 70 % of the full capacity. At a region smaller than 4 % or larger than 80 %, electrode damage is significant, and the cycle characteristic is impaired.

The use region of the negative electrode active material is the SOC (State of Charge) region between a charging end and a discharging end, in order to extract energy from a cell into which the positive and negative electrodes are assembled. The charge capacity in the first cycle corresponds to this region. The full capacity of the negative electrode active material denotes a maximum capacity at which charging and discharging are possible, and corresponds to an SOC region from 0 % to 100 %.

The use region of the negative electrode active material can be controlled based on the pre-doping amount and the reversible capacity of the positive electrode. That is, a lower limit value of the use region of the negative electrode active material can be defined according to the pre-doping amount to the negative electrode. In addition, an upper limit value of the use region of the negative electrode active material can be defined according to the reversible capacity of the positive electrode.

The positive electrode active material has an irreversible capacity. This irreversible capacity cannot be drawn once lithium ions have been released to the negative electrode. Therefore, the irreversible capacity is substantially the same as the pre-doping capacity to the negative electrode. That is, the pre-doping amount to the negative electrode can be defined by adjusting the irreversible capacity of the positive electrode active material. The irreversible capacity of the positive electrode active material varies depending on the charge potential of the positive electrode.

In the present embodiment, therefore, a ratio between the charge capacity in the first cycle and the charge capacity in the second cycle in the positive electrode is used as an index that conforms to the irreversible capacity of the positive electrode. Therefore, the pre-doping amount is represented indirectly by the ratio between the charge capacity in the first cycle and the charge capacity in the second cycle of the positive electrode.

In the present embodiment, the type and amount of the positive electrode active material are adjusted in such a manner that the charge capacity of the positive electrode in the first cycle ranges from 111 % to 167 % of the charge capacity in the second cycle. When the capacity is at 111 %, this corresponds to a charge capacity of 90 in the second cycle, taking as 100 the charge capacity in the first cycle. When the capacity is at 167 %, this corresponds to a charge capacity of 60 in the second cycle, taking as 100 the charge capacity in the first cycle.

In the present embodiment, thus, the capacity of the charge potential difference can be passed on to the negative electrode by using as the positive electrode active material a material whose charge capacity exhibits potential dependence, and by setting the charge potential in the first cycle to be higher than the charge potential in the second and subsequent cycles. The capacity of the charge potential difference constitutes the pre-doping capacity to the negative electrode.

However, cycle deterioration occurs, on account of, for instance, decomposition of the electrolyte solution (cell swelling) or collapse of the active material, when cycles are performed in a state where a charge potential remains set at the high potential of the first cycle. Deterioration of the negative electrode is accelerated, due to the use of an alloy-based material in the vicinity of SOC 0 %, when cycles are performed at a low charge potential.

Accordingly, pre-doping is performed exploiting the potential difference in the first cycle, and thereafter the charge potential is set low, whereby the positive electrode can be continuously used stably, without acceleration of the deterioration of the positive electrode active material, especially an alloy-based active material . As a result, the cycle characteristic can be enhanced.

Furthermore, a desired pre-doping state can be created and the energy density, cycle characteristic, stability, output characteristic and so forth can be optimized by controlling the charge potential in the first cycle and controlling the irreversible capacity of the positive electrode active material.

Exploiting the high potential sites and irreversible capacity fraction inherent to the positive electrode active material in such a manner, in order to bring about an arbitrary pre-doping state, suppresses an increase in weight such as a coating density due to the introduction of a third electrode such as a metallic lithium electrode into the cell, the use of the reversible capacity fraction of the positive electrode, or the like.

As a result, the energy density of the cell is increased. Also, the reversible capacity of the positive electrode and the reversible capacity of the negative electrode can be exploited to the maximum, and the capabilities of the materials can be utilized fully. The pre-doping amount and the reversible capacity can be adjusted to any values by cell designing (combination of positive and negative electrodes). This allows utilizing an optimal SOC region of the negative electrode, and can contribute to enhance the cycle characteristic without any operation that incurs a cost increase.

In addition to the effect of dramatically increasing durability, the invention affords also a superior effect in terms of productivity, in that the pre-doping process can be completed in a short time and in a very simple manner.

In the storage device according to the present embodiment, lithium ions move out from an opposed electrode. As a result, this elicits an effect also in terms of quality, in that formation of SEIs and generation of gas from the electrolyte solution during pre-doping are suppressed, and pre-doping of lithium ions to the positive and negative electrodes is performed uniformly.

By virtue of the short process, the electrodes can be uniformly impregnated with the electrolyte solution, while lowering the likelihood of deposition of lithium metal in the negative electrode. Uniform pre-doping and lower likelihood of lithium deposition translate into a dramatic improvement of the yield of the storage device, and constitute a major advantage in industrial terms.

### EXAMPLES

The present invention is explained in greater detail next based on examples. However, the present invention is not limited to the present examples.

### Example 1

### (1) Fabrication of a positive electrode

Herein, 80 parts by weight of LiCoO₂ and 10 parts by weight of Li₂MnO₃ as positive electrode active materials, 5 parts by weight of PVDF as a binder, and 5 parts by weight of carbon black as a conduction aid were weighed to prepare a positive electrode slurry with 100 parts by weight of N-methyl-2-pyrrolidone (NMP).

The positive electrode slurry was coated by a doctor blade method onto an A1 foil collector (coated portion of 26 mm × 40 mm, thickness of 10 µm, with a protruding tab portion for lead connection), and was dried, followed by pressing, to form thereby a 150 µm-thick positive electrode active material layer. The coating density of the positive electrode active material layer was set to 20 mg/cm², so as to yield 50 % of the full capacity of the negative electrode active material.

### (2) Fabrication of a negative electrode

Herein, 70 parts by weight of a negative electrode active material in the form of a pulverized product of silicon (silicon powder manufactured by Aldrich) to a particle size of 5 µm or smaller, plus 15 parts by weight of polyimide as a binder and 5 parts by weight of carbon black as a conduction aid to prepare a negative electrode slurry with 130 parts by weight of NMP.

The negative electrode slurry was coated by a doctor blade method onto a Cu foil collector (coated portion 24 mm × 38 mm, thickness 10 µm, with a protruding tab portion for lead connection), and was dried, followed by pressing, to form thereby a 30 µm-thick negative electrode active material layer. The coating density of the negative electrode active material layer was set to 10 mg/cm³.

### (3) Fabrication of a cell

The negative electrode and the positive electrode were stacked with a polyethylene separator (thickness 25 µm) interposed in between, in such a manner that the respective active material layers faced each other. An aluminum lead was welded to the tab portion of the positive electrode collector, and a nickel lead was welded to the tab portion of the negative electrode collector.

A stack including the positive electrode and the negative electrode was sealed and bonded, in such a manner that the respective leads were exposed to the exterior, while leaving an electrolyte solution inlet, using an exterior material of aluminum laminate. An electrolyte solution of 1.2 M LiPF₆, as a lithium salt, dissolved in a mixed solvent of EC/DMC/FEC at 70:25:5, was injected through the electrolyte solution inlet, and the exterior material of aluminum laminate was completely sealed thereafter.

### (4) Charging and discharging test

The leads of the positive electrode and negative electrode of the cell produced as described above were connected to corresponding terminals of a charging and discharging tester (by Aska Electronic). Then, initial charging was performed at a charge rate of 0.1 C until the charge potential of the positive electrode reached 4.6 V, and an initial charge capacity was measured. Thereafter, an initial discharge was performed at a discharge rate of 0.1 C until the positive electrode potential reached 3.0 V. The initial discharge capacity was measured, whereby the first cycle of charging and discharge was completed.

Charging in second and subsequent cycles was performed next at a charge and discharge rate of 0.1 C until the positive electrode potential reached 4.3 V, and the charge capacity in the second cycle was measured. Thereafter, a second cycle discharge was performed at a discharge rate of 0.1 C until the positive electrode potential reached 3.0 V. The initial charge capacity of the positive electrode was 150 % of the charge capacity in the second cycle.

Thereafter, charging and discharging were performed up to a thirtieth cycle, within a cell voltage range such that the positive electrode potential reached from 3.0 V to 4.3 V. Then the discharge capacity at the thirtieth cycle was measured. The capacity retention rate after 30 cycles was 82.7 %, which was indicative of a good cycle characteristic.

### Example 2

An experiment identical to that of Example 1 was performed, except that herein the initial charge potential was set to 4.5 V. The initial charge capacity of the positive electrode was 130 % of the charge capacity in the second cycle. The capacity retention rate after 30 cycles was 89.5 %, which was indicative of a good cycle characteristic.

### Example 3

An experiment identical to that of Example 1 was performed, except that herein the initial charge potential was set to 4.4 V. The initial charge capacity of the positive electrode was 115 % of the charge capacity in the second cycle. The capacity retention rate after 30 cycles was 89.1 %, which was indicative of a good cycle characteristic.

### Comparative Example 1

An experiment identical to that of Example 1 was performed, except that herein the initial charge potential was set to 4.3 V. The initial charge capacity of the positive electrode was 108 % of the charge capacity in the second cycle. The capacity retention rate after 30 cycles was 46.3 %, which was indicative of cycle deterioration.

### Comparative Example 2

An experiment identical to that of Example 1 performed, except that herein the initial charge potential in the second and subsequent cycles was set to 4.6 V. The initial charge capacity of the positive electrode was 150 % of the charge capacity in the second cycle. The capacity retention rate after 30 cycles was 2.3 %, which was indicative of dramatic cycle deterioration. Swelling of the exterior material of aluminum laminate was visually observed.

**Table 1**

| | Example 1 | Example 2 | Example 3 | Comp. Example 1 | Comp. Example 2 |
|---|---|---|---|---|---|
| Initial charge potential | 4.6 V | 4.5 V | 4.4 V | 4.3 V | 4.6 V |
| Cycle charge potential | 4.3 V | 4.3 V | 4.3 V | 4.3 V | 4.6 V |
| Initial charge capacity/cycle capacity | 150 % | 130 % | 115 % | 108 % | 150 % |
| Capacity retention rate (after 30 cycles) | 82.70 % | 89.50 % | 89.10 % | 46.30 % | 2.30 % |
| Cell appearance | No anomaly | No anomaly | No anomaly | No anomaly | Swelling |

**Table 2**

| | Mixture ratio | Discharge capacity upon 4.6 V charging | Discharge capacity upon 4.3 V charging |
|---|---|---|---|
| | Parts by weight | mAh/g | mAh/g |
| Li₂MnO₃ | 10 | 350 | 80 |
| LiCoO₂ | 80 | 200 | 150 |
| Mixture | 90 | 195 | 128 |

The above results indicate that the cycle characteristic could be significantly enhanced by increasing the initial charge potential to be higher than the charge potential in the second and subsequent cycles.

In Examples 1 to 3, an active material was used as an example that was a mixture of LiCoO₂ having a comparatively large capacity of up to 4.3 V, and Li₂MnO₃, having a large capacity at a potential higher than 4.3 V. Herein, Li₂MnO₃ having a capacity at a region higher than the voltage range that is used in the cycles, has a large capacity that remains ordinarily unused.

Thus, Li₂MnO₃ is not often used as a positive electrode active material in a lithium ion secondary battery or the like. In the present examples, however, the number of lithium ions involved in pre-doping per unit weight in the positive electrode increases when performing pre-doping by using a positive electrode active material that has a large capacity on a high potential side. This enables a proportional reduction in the positive electrode coating density as required conventionally for pre-doping, so that energy density is enhanced accordingly.

The present invention is not limited to the abovementioned embodiment, and various modifications can be made without departing from the scope of the invention. For instance, the material of the positive electrode, the material of the negative electrode, the material of the separator as well as the type of the electrolyte solution are not limited to those in the examples set forth above, and may be appropriately modified while satisfying the features set forth in the present invention.

Also, the values of the charge potential are not limited to the numerical values set forth in the embodiment and the examples, as long as the charge potential in the first cycle is higher than the charge potential in the second and subsequent cycles.

### List of Reference Signs

10 = lithium ion storage device
12 = negative electrode
14 = collector
16 = negative electrode active material layer
18 = positive electrode
20 = collector
22 = positive electrode active material layer
24 = lead
25 = film-like separator
26 = lead

## Claims

1. A method of manufacturing a lithium ion storage device (10) that is provided with a positive electrode (18) having a positive electrode active material (22) containing a lithium-containing compound, and a negative electrode (12) having an alloy-based negative electrode active material (16),
wherein a charge potential in a first cycle is higher than charge potentials in second and subsequent cycles.

2. The method of manufacturing a lithium ion storage device according to claim 1,
wherein a charge capacity of the positive electrode (18) in the first cycle ranges from 111 % to 167 % of a charge capacity in a second cycle.

3. The method of manufacturing a lithium ion storage device according to claim 1 or 2,
wherein the charge potential in the first cycle in the positive electrode (18) is 4.4 V or higher.

4. The method of manufacturing a lithium ion storage device according to claim 3, wherein
the positive electrode active material (22) comprises a first active material and a second active material, and
a capacity of the first active material at 4.4 V or lower is larger than that of the second active material, and a capacity of the second active material at 4.4 V or higher is larger than that of the first active material.

5. The method of manufacturing a lithium ion storage device according to any one of claims 1 to 4,
wherein a use region of the negative electrode active material (16) is 4 % to 80 % of a full capacity.
